# EUROPEAN PATENT APPLICATION

(11) **EP 3 280 143 A1**
(43) Date of publication of application: **07.02.2018**
(21) Application number: 16306012.2
(22) Date of filing: 04.08.2016
(51) Int. Cl.: H04N 19/117, H04N 19/136, H04N 19/176, H04N 19/186, H04N 19/182, H04N 19/82

(54) **A METHOD AND AN APPARATUS FOR IMAGE BLOCK ENCODING AND DECODING**

(71) Applicant: Thomson Licensing, 92130 Issy-les-Moulineaux (FR)
(72) Inventor: BORDES, Philippe, 35576 CESSON-SÉVIGNÉ (FR); POIRIER, Tangi, 35576 CESSON-SÉVIGNÉ (FR); CHEN, Ya, 35576 CESSON-SÉVIGNÉ (FR); RACAPE, Fabien, 35576 CESSON-SÉVIGNÉ (DE)
(74) Representative: Lorette, Anne

(57) **Abstract**

A decoding method is disclosed that comprises :
- decoding at least one image block from a bitstream;
- decoding a plurality of band offsets of a sample adaptive offset filter (SAO) and a band position of the first band offset from the bitstream;
- filtering the decoded block with the sample adaptive offset filter responsive to the decoded plurality of band offsets and to the decoded band position; wherein the first decoded band offset of the plurality of band offsets is necessarily a non-zero band offset.

## Description

### 1. TECHNICAL FIELD

The present principles generally relate to a method and an apparatus for image block encoding and decoding, and more particularly, to a method and an apparatus for image block encoding and decoding with in-loop filtering, in particular with sample adaptive offset filtering.

### 2. BACKGROUND ART

To achieve high compression efficiency, video coding schemes usually employ prediction and transform to leverage spatial and temporal redundancy in the video content. Generally, intra or inter prediction is used to exploit the intra or inter frame correlation, then the differences between the original image and the predicted image, often denoted as residuals, are transformed, quantized and entropy coded. To reconstruct the video, the compressed data is decoded by inverse processes corresponding to the prediction, transform, quantization and entropy coding.

Traditional video coding scheme include in-loop filtering processes for improving the quality of the reconstructed images. In-loop filtering may comprise deblocking filtering followed by Sample Adaptive Offset (SAO) filtering as in HEVC. The Sample Adaptive Offset filtering process is described in section 8.7.3 of the document ITU-T H.265 entitled "High Efficiency Video Coding". The SAO filtering comprises adding offsets to some pixels in order to reduce coding artifacts, e.g. ringing artifact. Two types of filtering may be performed when the SAO filtering is enabled (or activated): Edge Offset (EO) type or Band Offset (BO) type. The SAO filtering reduces sample distortion by first classifying the samples in a region into multiple categories, named band in the case of BO type, and adding a specific offset (a band offset in case of BO type) to each sample depending on its category.

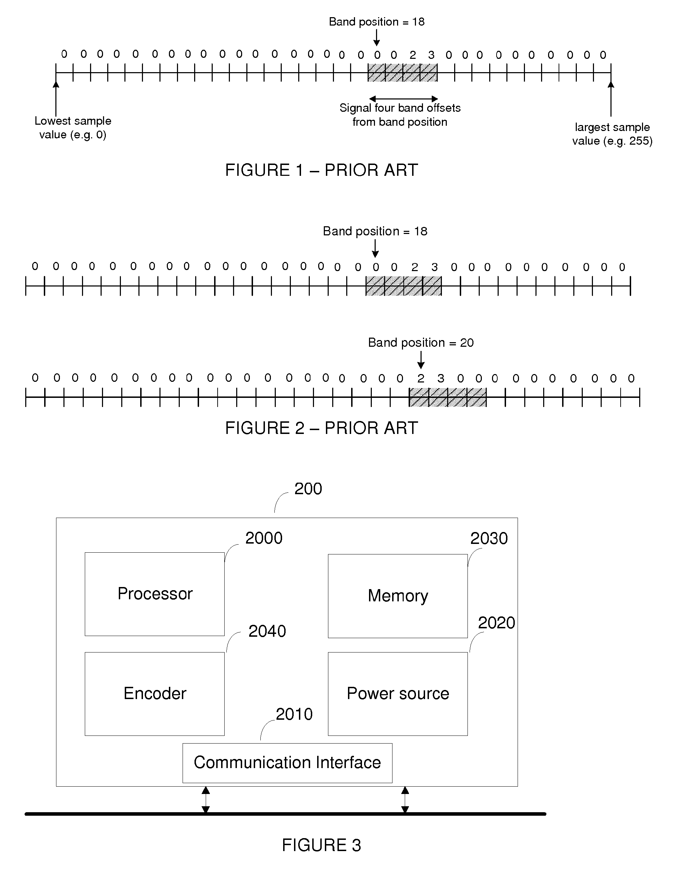

In BO filtering as defined in HEVC, one band offset is added to all samples whose values belong to the same band (range of values). To this aim, the sample value range is divided into 32 equal bands. For 8-bit samples in the range [0;255], the width of a band is 8. The band offsets may be signaled to the decoder. In HEVC, band offsets of only 4 consecutive bands and a band position (also known as starting band position) of a current block are signaled to the decoder. The starting band position indicates the position of the band of the first encoded band offset. As an example, on **Figure 1****,** the band position is 18 and the four offsets are {0, 0, 2, 3} which are assigned to the 4 consecutive bands 18, 19, 20 and 21 respectively. For the other bands, the offsets are inferred to be zero.

In HEVC, the SAO parameters (band position and band offsets) are signaled at the CTU (Coding Tree Unit) level. However, the encoding of these SAO parameters is sub-optimal. First, the configuration of band offsets depicted on **Figure 2** may be encoded at least in two ways. Since only bands 20 and 21 have non-zero offsets, the configuration may be encoded either by indicating that the band position is 18 and the band offsets are {0, 0, 2, 3} or by indicating the band position is 19 and the band offsets are {0, 2, 3, 0} or by indicating the band position is 20 and the band offsets are {2, 3, 0, 0}. In entropy coding theory, if an information can be encoded with different syntaxes, then the syntax is considered to be sub-optimal.

Second, the starting band position is encoded in absolute value with Fixed Length Coding (FLC) with non-adapting probability state, assuming the band positions are equi-probable. This assumption leads to a sub-optimal syntax.

It would hence be desirable to improve encoding of SAO filter parameters in order to reduce the coding cost.

### 3. BRIEF SUMMARY

Decoding and encoding methods are disclosed that allow to reduce the number of bits used to encode sample adaptive offset filter (SAO) parameters.

The decoding method comprises :
- decoding at least one image block from a bitstream;
- decoding a plurality of band offsets of a sample adaptive offset filter (SAO) and a band position of the first band offset from the bitstream;
- filtering the decoded block with the sample adaptive offset filter responsive to the decoded plurality of band offsets and to the decoded band position;
wherein the first decoded band offset of the plurality of band offsets is necessarily a non-zero band offset.

In a specific embodiment, decoding the first band offset comprises adding 1 to a decoded syntax element representative of the first band offset.

As an example, the at least one image block is a luma block. In a specific embodiment, the decoding method further comprises decoding at least two chroma blocks and decoding for at least a first chroma block an additional bit indicating whether all band offsets for the first chroma block are equal to zero.

In another specific embodiment, the decoding method further comprises decoding, for at least a second chroma block, an additional bit indicating whether all band offsets for the second chroma block are zero only in the case where the additional bit decoded for the first chroma block indicates not all band offsets for the first chroma block are equal to zero.

In another embodiment, decoding the band position comprises decoding the band position from a reference band position.

As an example, decoding the band position uses variable length decoding.

In a specific embodiment, the reference band position is a position of a band comprising a lowest sample value of the decoded block.

In a specific embodiment, decoding a band position from the reference band position comprises adding a decoded residue to the reference band position.

Advantageously, in the case where the difference between a position of a band comprising a largest sample value of the decoded block and a position of the band comprising the lowest sample value of the decoded block is inferior to a number of decoded band offsets, the band position is not decoded.

The encoding method comprises:
- encoding at least one image block in a bitstream;
- encoding a plurality of band offsets of a sample adaptive offset filter (SAO) and a band position of the first band offset in the bitstream;
- decoding the at least one image block;
- filtering the decoded block with the sample adaptive offset filter responsive to the encoded plurality of band offsets and to the encoded band position;
wherein the first encoded band offset of the plurality of band offsets is necessarily a non-zero band offset.

In a specific embodiment, encoding the first band offset comprises encoding the first band offset minus 1.

As an example, the at least one image block is a luma block. In a specific embodiment, the encoding method further comprises encoding at least two chroma blocks and encoding for at least a first chroma block an additional bit indicating whether all band offsets for the first chroma block are equal to zero.

In another specific embodiment, the encoding method further comprises encoding, for at least a second chroma block, an additional bit indicating whether all band offsets for the second chroma block are zero only in the case where the additional bit encoded for the first chroma block indicates not all band offsets for the first chroma block are equal to zero.

In a specific embodiment, encoding the band position comprises encoding the band position from a reference band position.

As an example, encoding the band position uses variable length coding.

In an exemplary embodiment, the reference band position is a position of a band comprising a lowest sample value of the decoded block.

In a specific embodiment, decoding a band position from the reference band position comprises adding a decoded residue to the reference band position.

Advantageously, in the case where the difference between a position of a band comprising a largest sample value of the decoded block and a position of the band comprising the lowest sample value of the decoded block is inferior to a number of decoded band offsets, the band position is not decoded.

A decoder is disclosed that comprises :
- means for decoding at least one image block from a bitstream;
- means for decoding a plurality of band offsets of a sample adaptive offset filter and a band position of the first band offset from the bitstream;
- means for filtering the decoded block with the sample adaptive offset filter responsive to the decoded plurality of band offsets and to the decoded band position;
wherein the first decoded band offset of the plurality of band offsets is necessarily a non-zero band offset.

In a variant, a decoder is disclosed that comprises a communication interface configured to access at least a bitstream and at least one processor configured to:
- decode at least one image block from the accessed bitstream;
- decode a plurality of band offsets of a sample adaptive offset filter and a band position of the first band offset from the bitstream;
- filter the decoded block with the sample adaptive offset filter responsive to the decoded plurality of band offsets and to the decoded band position;
wherein the first decoded band offset of the plurality of band offsets is necessarily a non-zero band offset.

The decoders are configured to implement the encoding method according to the various embodiments.

An encoder is disclosed that comprises :
- means for encoding at least one image block in a bitstream;
- means for encoding a plurality of band offsets of a sample adaptive offset filter and a band position of the first band offset in the bitstream;
- means for decoding the at least one image block;
- means for filtering the decoded block with the sample adaptive offset filter responsive to the encoded plurality of band offsets and to the encoded band position;
wherein the first encoded band offset of the plurality of band offsets is necessarily a non-zero band offset.

In a variant, an encoder is disclosed that comprises a communication interface configured to access at least one image block and at least one processor configured to:
- encode the accessed at least one image block in a bitstream;
- encode a plurality of band offsets of a sample adaptive offset filter and a band position of the first band offset in the bitstream;
- decode the at least one image block;
- filter the decoded block with the sample adaptive offset filter responsive to the encoded plurality of band offsets and to the encoded band position;
wherein the first encoded band offset of the plurality of band offsets is necessarily a non-zero band offset.

The encoders are configured to implement the encoding method according to the various embodiments.

A bitstream is disclosed that comprises coded data representative of at least one image block; and coded data representative of a plurality of band offsets of a sample adaptive offset filter and a band position of the first band offset, wherein the first band offset of the plurality of band offsets is necessarily a non-zero band offset. Namely the bitstream is without an explicit syntax indicating whether the first offset is zero or not.

A non-transitory processor readable medium having stored thereon a stream is disclosed, wherein the stream comprises:
coded data representative of at least one image block; and coded data representative of a plurality of band offsets of a sample adaptive offset filter and a band position of the first band offset, wherein the first band offset of the plurality of band offsets is necessarily a non-zero band offset.

A transmission method is disclosed that comprises:
- transmitting coded data representative of at least one image block; and
- transmitting coded data representative of a plurality of band offsets of a sample adaptive offset filter and a band position of the first band offset, wherein the first band offset of the plurality of band offsets is necessarily a non-zero band offset.

A transmitter is disclosed that comprises :
- means for transmitting coded data representative of at least one image block; and
- means for transmitting coded data representative of a plurality of band offsets of a sample adaptive offset filter and a band position of the first band offset, wherein the first band offset of the plurality of band offsets is necessarily a non-zero band offset.

In a variant, a transmitter is disclosed that comprises a communication interface configured to access coded data and at least one processor configured to:
- transmit coded data representative of at least one image block; and
- transmit coded data representative of a plurality of band offsets of a sample adaptive offset filter and a band position of the first band offset, wherein the first band offset of the plurality of band offsets is necessarily a non-zero band offset.

A non-transitory computer readable medium is disclosed that has instructions stored therein which, upon execution, instruct at least one processor to:
- decode at least one image block from the accessed bitstream;
- decode a plurality of band offsets of a sample adaptive offset filter and a band position of the first band offset from the bitstream;
- filter the decoded block with the sample adaptive offset filter responsive to the decoded plurality of band offsets and to the decoded band position;
wherein the first decoded band offset of the plurality of band offsets is necessarily a non-zero band offset.

A non-transitory computer readable medium is disclosed that has instructions stored therein which, upon execution, instruct at least one processor to:
- encode the accessed at least one image block in a bitstream;
- encode a plurality of band offsets of a sample adaptive offset filter and a band position of the first band offset in the bitstream;
- decode the at least one image block;
- filter the decoded block with the sample adaptive offset filter responsive to the encoded plurality of band offsets and to the encoded band position;
wherein the first encoded band offset of the plurality of band offsets is necessarily a non-zero band offset.

### 4. BRIEF SUMMARY OF THE DRAWINGS

- Figures 1 and 2 illustrates exemplary division of a sample range into 32 bands;
- Figure 3 represents an exemplary architecture of a transmitter configured to encode an image block in a bitstream according to a non-limiting embodiment;
- Figure 4 illustrates an exemplary HEVC encoder;
- Figure 5 and 6 represent flowcharts of a method for encoding an image block in a bitstream according to specific and non-limiting embodiments;
- Figure 7 illustrates an exemplary division of a sample range into 32 bands with an histogram of reconstructed block samples;
- Figure 8 represents an exemplary architecture of a receiver 100 configured to decode an image block from a bitstream to obtain a decoded image block according to a non-limiting embodiment;
- Figure 9 illustrates a block diagram of an exemplary HEVC video decoder; and
- Figure 10 and 11 represent flowcharts of a method for decoding an image block from a bitstream according to specific and non-limiting embodiments.

### 5. DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding apparatus.
In the following, the word "reconstructed" and "decoded" can be used interchangeably. Usually but not necessarily "reconstructed" is used on the encoder side while "decoded" is used on the decoder side.

**Figure 3** represents an exemplary architecture of a transmitter 200 configured to encode an image block in a bitstream according to a non-limiting embodiment.

The transmitter 200 comprises one or more processor(s) 2000, which could comprise, for example, a CPU, a GPU and/or a DSP (English acronym of Digital Signal Processor), along with internal memory 2030 (e.g. RAM, ROM, and/or EPROM). The transmitter 200 comprises one or more communication interface(s) 2010 (e.g. a keyboard, a mouse, a touchpad, a webcam), each adapted to display output information and/or allow a user to enter commands and/or data (e.g. a stream); and a power source 2020 which may be external to the transmitter 200. The transmitter 200 may also comprise one or more network interface(s) (not shown). Encoder module 2040 represents the module that may be included in a device to perform the coding functions. Additionally, encoder module 2040 may be implemented as a separate element of the transmitter 200 or may be incorporated within processor(s) 2000 as a combination of hardware and software as known to those skilled in the art.

The image block may be obtained from a source. According to different embodiments, the source can be, but is not limited to:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

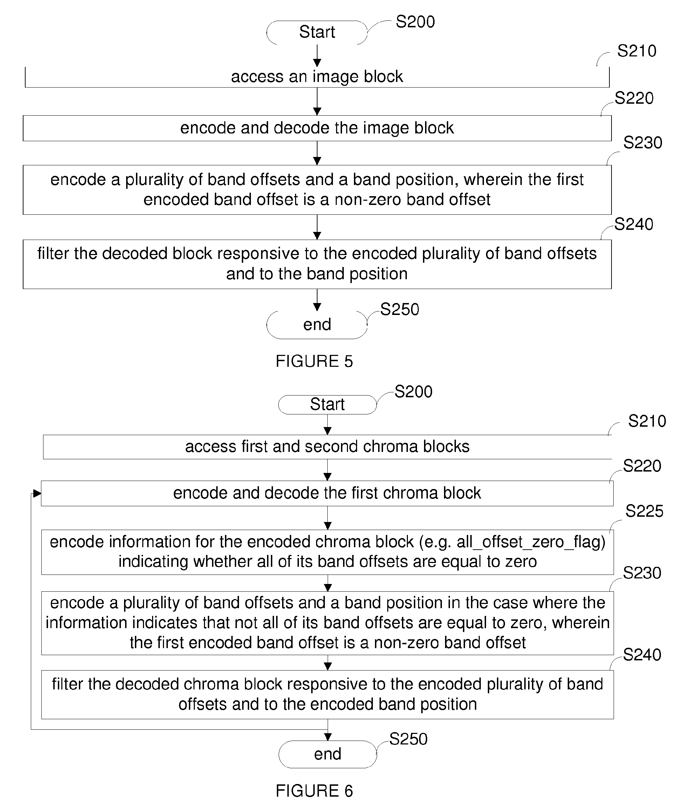

According to an exemplary and non-limiting embodiment, the transmitter 200 further comprises a computer program stored in the memory 2030. The computer program comprises instructions which, when executed by the transmitter 200, in particular by the processor 2000, enable the transmitter 200 to execute the encoding method described with reference to Figure 5 and/or 6.

According to a variant, the computer program is stored externally to the transmitter 200 on a non-transitory digital data support, e.g. on an external storage medium such as a HDD, CD-ROM, DVD, a read-only and/or DVD drive and/or a DVD Read/Write drive, all known in the art. The transmitter 200 thus comprises a mechanism to read the computer program. Further, the transmitter 200 could access one or more Universal Serial Bus (USB)-type storage devices (e.g., "memory sticks.") through corresponding USB ports (not shown).

According to exemplary and non-limiting embodiments, the transmitter 200 can be, but is not limited to:
- a mobile device ;
- a communication device ;
- a game device ;
- a tablet (or tablet computer) ;
- a laptop ;
- a still image camera;
- a video camera ;
- an encoding chip or encoding device/apparatus;
- a still image server; and
- a video server (e.g. a broadcast server, a video-on-demand server or a web server).

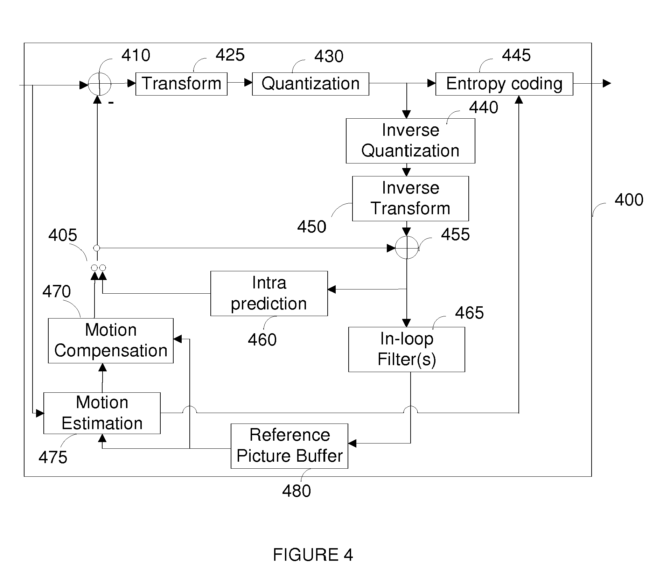

**Figure 4** illustrates an exemplary video encoder 400, e.g. a HEVC video encoder, adapted to execute the encoding method of figures 5 and/or 6. The encoder 400 is an example of a transmitter 200. To encode a video sequence with one or more pictures, a picture is partitioned into one or more slices where each slice can include one or more slice segments. A slice segment is organized into coding units, prediction units and transform units. The HEVC specification distinguishes between "blocks" and "units," where a "block" addresses a specific area in a sample array (e.g., luma, Y), and the "unit" includes the collocated block of all encoded color components (Y, Cb, Cr, or monochrome), syntax elements and prediction data that are associated with the block (e.g., motion vectors).

For coding, a picture is partitioned into coding tree blocks (CTB) of square shape with a configurable size, and a consecutive set of coding tree blocks is grouped into a slice. A Coding Tree Unit (CTU) corresponding to a CTB contains the CTBs of the encoded color components. A CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can be used to refer to a macroblock, a partition and a sub-block as specified in H.264/AVC or other video coding standards, and more generally to refer to an array of samples of various sizes.

In the exemplary encoder 400, a picture is encoded by the encoder elements as described below. The picture to be encoded is processed in units of CUs. Each CU is encoded using either an intra or inter mode. When a CU is encoded in an intra mode, it performs intra prediction (460). In an inter mode, motion estimation (475) and compensation (470) are performed. The encoder decides (405) which one of the intra mode or inter mode to use for encoding the CU, and indicates the intra/inter decision by a prediction mode flag. Residuals are calculated by subtracting (410) a predicted sample block (also known as a predictor) from the original image block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. The reference extends over two times the block size in horizontal and vertical direction using available samples from previously reconstructed blocks. When an angular prediction mode is used for intra prediction, reference pixels can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed.

The motion information (i.e., motion vector and reference picture index) can be signaled in two methods, namely, "advanced motion vector prediction (AMVP)" and "merge mode." In AMVP, a video encoder or decoder assembles candidate lists based on motion vectors determined from already coded blocks. The video encoder then signals an index into the candidate lists to identify a motion vector predictor (MVP) and signals a motion vector difference (MVD). At the decoder side, the motion vector (MV) is reconstructed as MVP+MVD.

In the merge mode, a video encoder or decoder assembles a candidate list based on already coded blocks, and the video encoder signals an index for one of the candidates in the candidate list. At the decoder side, the motion vector and the reference picture index are reconstructed based on the signaled candidate.

In HEVC, the precision of the motion information for motion compensation is one quarter-sample for the luma component and one eighth-sample for the chroma components. A 7-tap or 8-tap interpolation filter is used for interpolation of fractional-sample pixel positions, i.e., 1/4, 1/2 and 3/4 of full pixel locations in both horizontal and vertical directions can be addressed for luma.

The residuals are transformed (425) and quantized (430). The quantized transform coefficients, as well as motion vectors and other syntax elements, are entropy coded (445) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder comprises a decoding loop and thus decodes an encoded block to provide a reference for further predictions. The quantized transform coefficients are de-quantized (440) and inverse transformed (450) to decode residuals. An image block is reconstructed by combining (455) the decoded residuals and the predicted sample block. An in-loop filter (465) is applied to the reconstructed picture, for example, to perform deblocking/SAO (Sample Adaptive Offset) filtering to reduce coding artifacts. The filtered image is stored at a reference picture buffer (480).

**Figure 5** represents a flowchart of a method for encoding an image block in a bitstream according to a specific and non-limiting embodiment.

The method starts at step S200. At step S210, a transmitter, e.g. such as the encoder 400, accesses an image block. At step S220, the transmitter encodes the accessed image block in a bitstream and further decodes/reconstructs the encoded image block. Encoding the image block may comprise obtaining residuals by subtracting a predictor from the image block. The predictor may be obtained from intra prediction or motion-compensated prediction (i.e., inter prediction). Then, the residuals may be transformed and quantized into quantized coefficients which are entropy coded in the bitstream. The decoding of the encoded block usually comprises de-quantizing and inverse transforming the quantized coefficients to obtain decoded residuals. The image block is decoded/reconstructed by combining the decoded residuals and the predictor. As an example, the block is a luma block. In a variant, the block is a chroma block. It should be noted that the term "decoded" or "reconstructed" may mean that the image block is partially "decoded," for example, after deblocking filtering but before SAO filtering.

At step S230, the transmitter (e.g. using the module 445 of the encoder 400) encodes a plurality of band offsets and a band position in the bitstream. Advantageously, the coding of the first band offset of the plurality of band offsets is modified so that the first band offset is necessarily a non-zero band offset.

Therefore, the encoder encodes the first offset without an explicit syntax indicating whether the first offset is zero or not. Referring back to the example discussed before where the band offsets are {0, 2, 3, 0}, the band position is moved from 19 to 20, and the offsets to be encoded become {2, 3, 0, 0}, namely, 2 is encoded first, then 3, then 0 and then 0. Consequently, in such case, there is no need to encode a bit indicating whether the first offset is zero or not. In a specific embodiment, the value of the first band offset minus 1 is encoded instead of the band offset value itself. In the above example of {2, 3, 0, 0} band offsets, a value 1 is encoded for the first band offset, a value 3 for the second band offset and values 0 for the third and fourth band offsets. By adding such a constraint on the encoding of the band offsets, one may spare one bit. Band offset sign may also be encoded in the bitstream for non-zero band offsets. In a specific example, 4 bands offsets are encoded, the first one being non-zero. The plurality of band offsets of a sample adaptive offset filter (SAO) and the band position may be obtained from the original image block and the decoded image block. The present principles are not limited by the way these SAO parameters are obtained. As an example, they may be obtained by minimizing the average sample rate-distortion cost or by using another criterion.

At step S240, the transmitter filters the decoded block with the sample adaptive offset filter responsive to the encoded plurality of band offsets and to the encoded band position. The filtered decoded block may then be stored in the reference picture buffer 480 and serves for prediction of other image blocks. The method ends at step S250.

In another specific embodiment described in **Figure 6****,** the transmitter accesses first and second chroma blocks (e.g. Cb and Cr) at step S210. At step S220, the transmitter encodes and decodes the first chroma block (Cb). At step S225, the transmitter encodes information (e.g. an additional bit **sao_all_offsets_zero)** for the encoded chroma block indicating whether all of its band offsets are equal to zero. Indeed, in the HEVC SAO filter the same SAO type (indicated by the syntax element **sao_type_idx_chroma)** is shared between the two chroma components. Therefore, in the case where the SAO filter is disabled for the chroma, SAO filter is disabled for both chroma components. Consequently, in the case where one of the two chroma components (either Cb or Cr) have all its band offsets equal to zero while the other chroma component have at least one non-zero band offset, it is necessary to encode 4 zero values for the component having all its band offsets equal to zero. By encoding the additional bit **sao_all_offsets_zero,** additional bits may be spared because it is not anymore necessary to encode 4 zero values for the component having all its band offsets equal to zero. Therefore, band offsets and band position for the chroma block are encoded in step S230 only in the case where the information indicates that not all of its band offsets are equal to zero, otherwise no band offset and no band position are coded. At step S240, the transmitter filters the decoded chroma block with the sample adaptive offset filter responsive to the encoded plurality of band offsets and to the encoded band position.

The steps S220, S225, S230 and S240 are repeated for the second chroma block (Cr). However, the additional bit **sao_all_offsets_zero** for the second chroma component (Cr) may be avoided (i.e. not encoded) in the case where **sao_all_offsets_zero** indicates all band offsets for the first chroma component (Cb) are zero, since the second chroma component band offsets are probably not all zero. Indeed, in the latter case it is more efficient to disable the SAO filtering by setting the filtering mode to "not applied" **(sao_type_idx_chroma** =0). The method ends at step S250.

This specific embodiment for chroma component is independent of the embodiment for luma component. However both embodiments may be advantageously combined together.

Table 1 shows expected gain (number of bits) obtained with the proposed method for coding chroma band offsets for different chroma offsets configurations. This specific embodiment for chroma component is independent of the embodiment for luma component. However both embodiments may be advantageously combined together.
In HEVC, a specific mode (mode "not applied" as indicated in table 7-8 of HEVC) is used to indicate the case where all bands offsets are equal to zero for both chroma components. In this case, no band offset and band position are encoded.

**Table 1**

| Expected gains in number of bits (negative values are gains) [x = non-zero, y = zero or non-zero, 0 = zero] | | | | | | | |
|---|---|---|---|---|---|---|---|
| Offsets configuration | *sao*_*all*_*of fsets_zero* | 1^{st} Offset | 2^{nd} Offset | 3^{rd} Offset | 4^{th} Offset | Band position | Overall Gain |
| Cb = x y y y | +1 | -1 | | | | | 0 |
| Cr = x y y y | +1 | -1 | | | | | |
| Cb = x y y y | +1 | -1 | | | | | -8 |
| Cr = 0 0 0 0 | +1 | -1 | -1 | -1 | -1 | -5 (FLC) | |
| Cb = 0 0 0 0 | +1 | -1 | -1 | -1 | -1 | -5 (FLC) | -9 |
| Cr = x y y y | | -1 | | | | | |

Table 2 illustrates an exemplary syntax table of SAO parameters encoding according to the present principles. The difference with HEVC syntax is shown in italics.

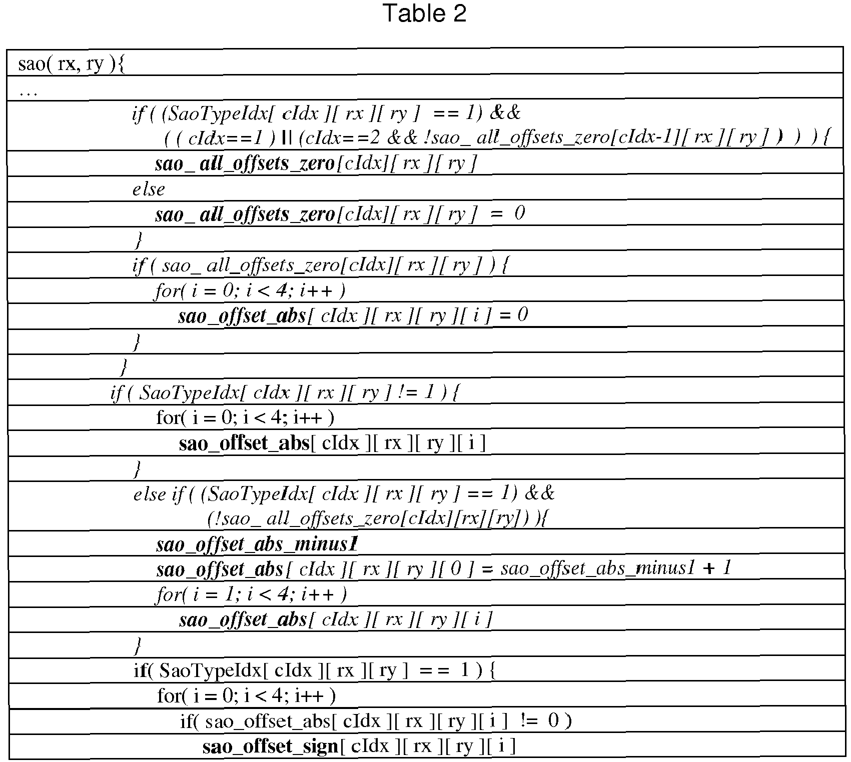

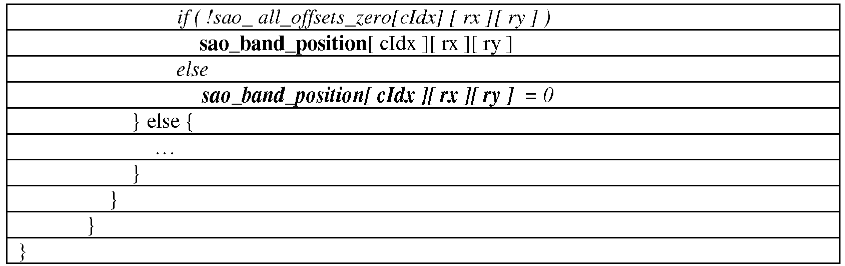

***sao_offset_abs_minus1*** plus 1 specifies the absolute value of the first band offset. The encoding of the first band offset is thus specific because the band offset value minus 1 is encoded instead of the band offset value itself. For all the remaining band offsets, their values are encoded directly.

*sao*_*all_offsets_zero[cldx=1]* corresponds to the **sao_all_offsets_zero** for the first chroma component (e.g. Cb) and *sao_all_offsets_zero[cldx=2]* corresponds to the *sao_all_offsets_zero* for the second chroma component (e.g. Cr).

The HEVC syntax elements are defined in sections 7.3.8.3 and 7.4.9.3 of the document ITU-T H.265 entitled "High Efficiency Video Coding".

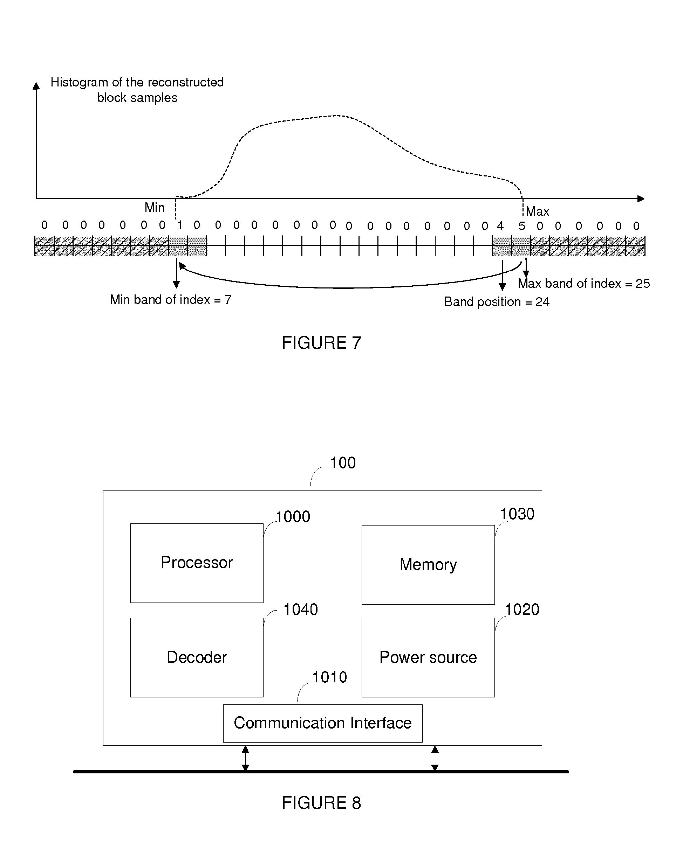

In yet another embodiment, the band position **(sao_band_position)** either for luma component or for chroma components or for both luma and chroma components is encoded with respect to a reference band position RefVal. In HEVC, the band position is encoded in absolute value which is inefficient in the case where the sample range of the decoded block is smaller than the [0;255] range in 8 bits or more generally smaller than the [0;2^{BitDepth}-1] range. The lowest sample value Min and possibly the largest sample value Max of the decoded block may be determined by analyzing the decoded sample values of the current block. Values of the classical range [0;2^{BitDepth}-1] may be absent in the current block as depicted on **Figure 7****.** In such a case, decoding non-zero band offsets for bands outside the current block sample value range is useless. Indeed, no sample in the current block is going to be modified by such band offsets. As an example, the reference band position is the position of the band comprising the lowest sample value (Min) of the decoded (luma and/or chroma) block, i.e. the band of index 7 on figure 7. The band position may thus be decoded more efficiently with respect to the reference band position. Indeed, a smaller value to be encoded in general results in fewer bits using VLC. In a specific embodiment, instead of encoding the absolute value of the band position in the bitstream, a residue r is encoded that is equal to a difference between the band position and a reference value RefVal, r= band_position-RefVal. As an example, RefVal=Min Band position. On figure 7, band_position = 24 and RefVal =7. VLC is advantageously used instead of FLC to encode residue r.

In the case where the difference between the Max band position (position of the band comprising the largest sample value) and the Min band position (position of the band comprising the largest sample value) is inferior to a number of decoded band offsets (e.g. inferior to 4), the band position is not decoded. Advantageously, in this case, the number of decoded offsets is reduced accordingly too.

In HEVC, in BO, in case where the band position is close to the last band position, the band offsets may correspond to non-consecutive bands since the bands are managed by a circular buffer as depicted on Figure 7. According to the present principles, the circular buffer for band position is modified by replacing first band (of index 0) and last band position (of index 31) with the Min band comprising the value Min (band of index 7 on Figure 7) and the Max band comprising the value Max (band of index 25 on Figure 7). Indeed, in the case where the band position is close to the Max band, the offset values may correspond to non-consecutive bands, and goes back to Min band instead of the band with zero index since the band positions outside the decoded block sample range are useless.
This specific embodiment for encoding the band position is independent of the embodiments for encoding the luma component (figure 5) and/or chroma components (figure 6). However these embodiments may be advantageously combined together.

**Figure 8** represents an exemplary architecture of a receiver 100 configured to decode an image block from a bitstream to obtain a decoded image block according to a non-limiting embodiment.

The receiver 100 comprises one or more processor(s) 1000, which could comprise, for example, a CPU, a GPU and/or a DSP (English acronym of Digital Signal Processor), along with internal memory 1030 (e.g. RAM, ROM and/or EPROM). The receiver 100 comprises one or more communication interface(s) 1010 (e.g. a keyboard, a mouse, a touchpad, a webcam), each adapted to display output information and/or allow a user to enter commands and/or data (e.g. the decoded image block); and a power source 1020 which may be external to the receiver 100. The receiver 100 may also comprise one or more network interface(s) (not shown). The decoder module 1040 represents the module that may be included in a device to perform the decoding functions. Additionally, the decoder module 1040 may be implemented as a separate element of the receiver 100 or may be incorporated within processor(s) 1000 as a combination of hardware and software as known to those skilled in the art.

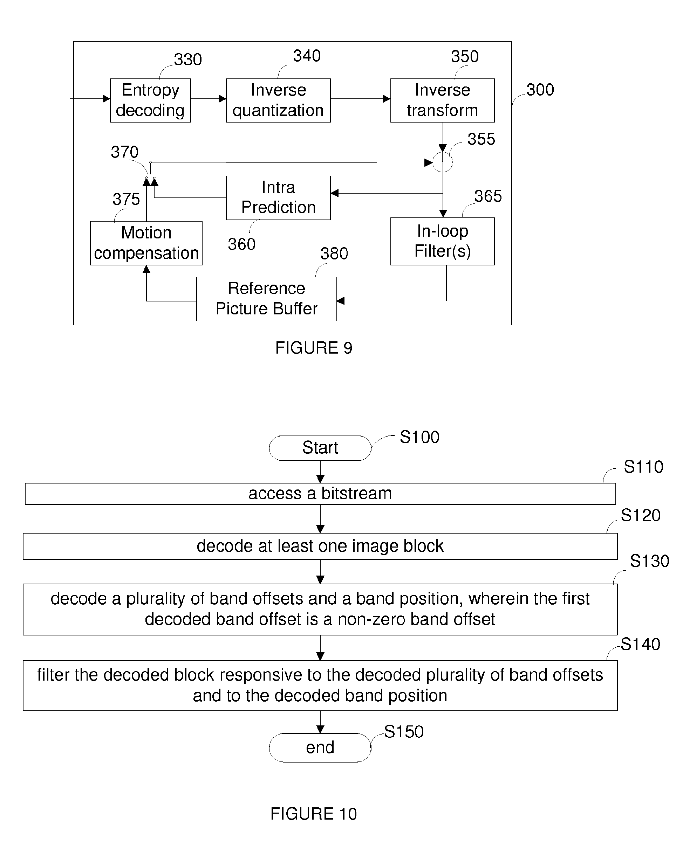

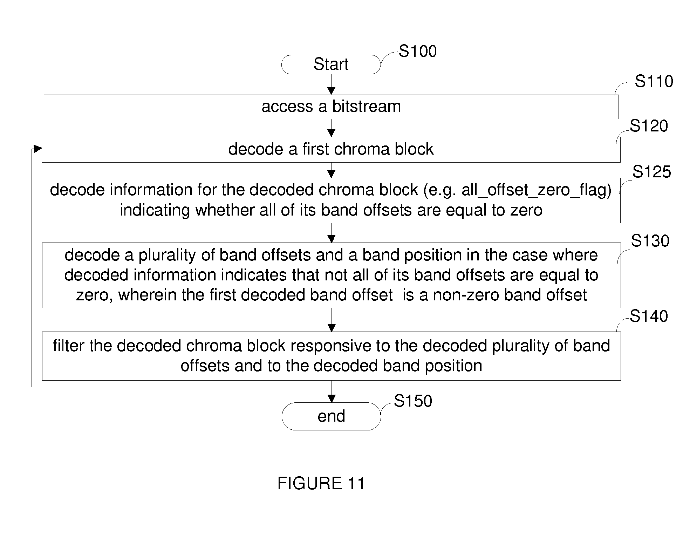

The bitstream may be obtained from a source. According to different embodiments, the source can be, but is not limited to:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).
According to different embodiments, the decoded image block may be sent to a destination, e.g. a display device. As an example, the decoded image block is stored in a remote or in a local memory, e.g. a video memory or a RAM, a hard disk. In a variant, the decoded image block is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.
According to a specific and non-limiting embodiment, the receiver 100 further comprises a computer program stored in the memory 1030. The computer program comprises instructions which, when executed by the receiver 100, in particular by the processor 1000, enable the receiver to execute the decoding method described with reference to Figures 10 and/or 11. According to a variant, the computer program is stored externally to the receiver 100 on a non-transitory digital data support, e.g. on an external storage medium such as a HDD, CD-ROM, DVD, a read-only and/or DVD drive and/or a DVD Read/Write drive, all known in the art. The receiver 100 thus comprises a mechanism to read the computer program. Further, the receiver 100 could access one or more Universal Serial Bus (USB)-type storage devices (e.g., "memory sticks.") through corresponding USB ports (not shown).
According to exemplary and non-limiting embodiments, the receiver 100 can be, but is not limited to:
- a mobile device ;
- a communication device ;
- a game device ;
- a set top box;
- a TV set;
- a tablet (or tablet computer) ;
- a laptop ;
- a video player, e.g. a Blu-ray player, a DVD player;
- a display and
- a decoding chip or decoding device/apparatus.

**Figure 9** illustrates a block diagram of an exemplary HEVC video decoder 200 adapted to execute the decoding method of figures 10 and/or 11. The video decoder 200 is an example of a receiver 100. In the exemplary decoder 200, a bitstream is decoded by the decoder elements as described below. Video decoder 200 generally performs a decoding pass reciprocal to the encoding pass as described in Figure 4, which performs video decoding as part of encoding video data.

In particular, the input of the decoder includes a video bitstream, which may be generated by the video encoder 400. The bitstream is first entropy decoded (330) to obtain transform coefficients, motion vectors, and other coded information. The transform coefficients are de-quantized (340) and inverse transformed (350) to decode residuals. The decoded residuals are then combined (355) with a predicted sample block (also known as a predictor) to obtain a decoded/reconstructed image block. The predicted sample block may be obtained (370) from intra prediction (360) or motion-compensated prediction (i.e., inter prediction) (375). As described above, AMVP and merge mode techniques may be used during motion compensation, which may use interpolation filters to calculate interpolated values for sub-integer pixels of a reference block. An in-loop filter (365) is applied to the reconstructed image. The in-loop filter may comprise a deblocking filter and a SAO filter. The filtered image is stored at a reference picture buffer (380).

**Figure 10** represents a flowchart of a method for decoding an image block from a bitstream according to a specific and non-limiting embodiment.

The method starts at step S100. At step S110, a receiver 100 such as the decoder 300 accesses a bitstream. At step S120, the receiver decodes at least one image block from the bitstream. Decoding the block may comprise entropy decoding to obtain transform coefficients, motion vectors, and other coded information. The transform coefficients may then be de-quantized and inverse transformed to obtain residuals. The block is reconstructed by combining the residuals and a predictor. The predictor may be obtained from intra prediction or motion-compensated prediction (i.e., inter prediction). As an example, the block is a luma block. In a variant, the block is a chroma block. It should be noted that the term "decoded" or "reconstructed" may mean that the image block is partially "decoded," for example, after deblocking filtering but before SAO filtering, and the decoded block may be different from the final decoded output that is used for display.

At step S130, the receiver decodes a plurality of band offsets of a sample adaptive offset filter (SAO) and a band position from the bitstream. Advantageously, the first decoded band offset of the plurality of band offsets is necessarily a non-zero band offset. Therefore, for the example where the band offsets are {2, 3, 0, 0}, 2 is decoded first, then 3, then 0 and then 0. In such case, there is no need to decode a bit indicating whether the first offset is zero or not. Namely the decoder decodes the first offset without an explicit syntax indicating whether the first offset is zero or not. In a specific embodiment, the value of the first band offset minus 1 is decoded instead of the band offset value itself. 1 is added to the decoded value for the first band offset in order to obtain the first band offset value. In the above example of {2, 3, 0, 0} band offsets, a value 1 is decoded for the first band offset, a value 3 for the second band offset and values 0 for the third and fourth band offsets. By adding such a constraint on the decoding of the band offsets, one may thus spare one bit. Band offset sign may also be decoded from the bitstream for non-zero band offsets. In a specific example, 4 bands offsets are decoded, the first one being non-zero. At step S140, the receiver filters the decoded block with the sample adaptive offset filter responsive to the decoded plurality of band offsets and to the decoded band position.

The method ends at step S150.

In another specific embodiment described in **Figure 11****,** the receiver accesses a bitstream at step S110. At step S120, the receiver decodes a first chroma block (Cb). At step S125, the receiver decodes information (e.g. an additional bit **sao_all_offsets_zero)** for the chroma block indicating whether all of its band offsets are equal to zero. Indeed, in the HEVC SAO filter the same SAO type is shared between the two chroma components. Therefore, in the case where the SAO filter is disabled for the chroma, it is necessarily disabled for both chroma components. Therefore, in the case where one of the two chroma components (either Cb or Cr) have all its band offsets equal to zero while the other chroma component have at least one non-zero band offset, it is necessary to decode 4 zero values for the component having all its band offsets equal to zero. By decoding an additional bit (**sao_all_offsets_zero),** additional bits may be spared. Therefore, band offsets and band position for the chroma block are decoded in step S130 only in the case where the information indicates that not all of its band offsets are equal to zero, otherwise no band offset and no band position are coded. At step S140, the receiver filters the decoded chroma block with the sample adaptive offset filter responsive to the decoded plurality of band offsets and to the decoded band position.

The steps S120, S125, S130 and S140 are repeated for the second chroma component (Cr). However, the additional bit (**sao_all_offsets_zero)** for the second chroma component (Cr) may be avoided (i.e. not decoded) in the case where **sao_all_offsets_zero** indicates all band offsets for the first chroma component (Cb) are zero, since the second chroma component band offsets are necessarily not all zero. The method ends at step S150.
This specific embodiment for chroma component is independent of the embodiment for luma component. However both embodiments may be advantageously combined together.

In yet another embodiment, the band position (**sao_band_position**) either for luma component or for chroma components or for both luma and chroma components is decoded from a reference band position. In HEVC, the band position is decoded in absolute value which is inefficient in the case where the sample range of the decoded block is smaller than the [0;255] range in 8 bits or more generally smaller than the [0;2^{BitDepth}-1 range. The lowest sample value Min and possibly the largest sample value Max of the decoded block may be determined by analyzing the decoded sample values of the current block. Values of the classical range [0;2^{BitDepth}-1] may be absent in the current block as depicted on Figure 7. In such a case, decoding non-zero band offsets for bands outside the current block sample value range is useless. Indeed, no sample in the current block is going to be modified by such band offsets. As an example, the reference band position is the position of the band comprising the lowest sample value (Min) of the decoded (luma and/or chroma) block, i.e. the band of index 7 on figure 7. The band position may thus be decoded more efficiently with respect to the reference band position. In a specific embodiment, instead of decoding an absolute value of the band position in the bitstream, a residue r (the one encoded by the encoding method) is decoded. The band_position is then obtained by adding a reference value RefVal to the residue r, band_position=r+RefVal. As an example, RefVal=Min Band position, i.e. 7 on figure 7. VLC is advantageously used instead of FLC to decode the residue r.

In the case where the difference between the Max band position and the Min band position is inferior to a number of decoded band offsets (e.g. inferior to 4), the band position is not decoded.

In HEVC, in BO, in case where the band position is close to the last band position, the band offsets may correspond to non-consecutive bands since the bands are managed by a circular buffer as depicted on Figure 7. According to the present principles, the circular buffer for band position is modified by replacing first band (of index 0) and last band position (of index 31) with the Min band comprising the value Min (band of index 7 on Figure 7) and the Max band comprising the value Max (band of index 25 on Figure 7). Indeed, in the case where the band position is close to the Max band, the offset values may correspond to non-consecutive bands, and goes back to Min band instead of the band with zero index since the band positions outside the decoded block sample range are useless.

This specific embodiment for decoding the band position is independent of the embodiments for decoding the luma component (figure 10) and/or chroma components (figure 11). However these embodiments may be advantageously combined together.

On Figures 5, 6, 10 and 11, the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

Various embodiments are described with respect to the HEVC standard. However, the present principles are not limited to HEVC, and can be applied to other standards, recommendations, and extensions thereof, including for example HEVC or HEVC extensions like Format Range (RExt), Scalability (SHVC), and Multi-View (MV-HEVC) Extensions. The various embodiments are described with respect to the encoding/decoding of an image block. They may be applied to encode/decode a whole picture or a whole sequence of images.

Various methods are described above, and each of the methods comprises one or more steps or actions for achieving the described method. Unless a specific order of steps or actions is required for proper operation of the method, the order and/or use of specific steps and/or actions may be modified or combined.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A decoding method comprising :
- decoding (S120) at least one image block from a bitstream;
- decoding (S130) a plurality of band offsets of a sample adaptive offset filter and a band position of the first band offset from said bitstream;
- filtering (S140) said decoded block with said sample adaptive offset filter responsive to the decoded plurality of band offsets and to the decoded band position;
wherein the first decoded band offset of said plurality of band offsets is necessarily a non-zero band offset.

2. The decoding method according to claim 1, wherein said at least one image block is a luma block and wherein said method further comprises decoding at least two chroma blocks and decoding for at least a first chroma block an additional bit indicating whether all band offsets for said first chroma block are equal to zero.

3. The decoding method according to claim 2, further comprising decoding, for at least a second chroma block, an additional bit indicating whether all band offsets for said second chroma block are zero only in the case where the additional bit decoded for the first chroma block indicates not all band offsets for said first chroma block are equal to zero.

4. The decoding method according to any one of claims 1 to 3, wherein decoding said band position comprises decoding said band position from a reference band position.

5. The decoding method according to any one of claims 1 to 4, wherein decoding said band position uses variable length decoding.

6. The decoding method according to claim 4 or 5, wherein said reference band position is a position of a band comprising a lowest sample value of said decoded block.

7. The decoding method according to any one of claims 4 to 6, wherein decoding a band position from said reference band position comprises adding a decoded residue to said reference band position.

8. The decoding method according to any one of claims 4 to 7, wherein in the case where the difference between a position of a band comprising a largest sample value of said decoded block and a position of the band comprising the lowest sample value of said decoded block is inferior to a number of decoded band offsets, the band position is not decoded.

9. An encoding method comprising:
- encoding at least one image block in a bitstream;
- encoding a plurality of band offsets of a sample adaptive offset filter and a band position of the first band offset in said bitstream;
- decoding said at least one image block;
- filtering said decoded block with said sample adaptive offset filter responsive to the encoded plurality of band offsets and to the encoded band position;
wherein the first encoded band offset of said plurality of band offsets is necessarily a non-zero band offset.

10. The encoding method according to claim 9, wherein said at least one image block is a luma block and wherein said method further comprises encoding at least two chroma blocks and encoding for at least a first chroma block an additional bit indicating whether all band offsets for said first chroma block are equal to zero.

11. The encoding method according to claim 10, further comprising encoding, for at least a second chroma block, an additional bit indicating whether all band offsets for said second chroma block are zero only in the case where the additional bit encoded for the first chroma block indicates not all band offsets for said first chroma block are equal to zero.

12. The encoding method according to any one of claims 9 to 11, wherein encoding said band position comprises encoding said band position from a reference band position.

13. The encoding method according to any one of claims 9 to 12, wherein encoding said band position uses variable length coding.

14. The encoding method according to claim 12 or 13, wherein said reference band position is a position of a band comprising a lowest sample value of said decoded block.

15. The encoding method according to any one of claims 12 to 14, wherein decoding a band position from said reference band position comprises adding a decoded residue to said reference band position.

16. The encoding method according to any one of claims 12 to 15, wherein in the case where the difference between a position of a band comprising a largest sample value of said decoded block and a position of the band comprising the lowest sample value of said decoded block is inferior to a number of decoded band offsets, the band position is not decoded.

17. A decoder comprising :
- means for decoding at least one image block from a bitstream;
- means for decoding a plurality of band offsets of a sample adaptive offset filter and a band position of the first band offset from said bitstream;
- means for filtering said decoded block with said sample adaptive offset filter responsive to the decoded plurality of band offsets and to the decoded band position;
wherein the first decoded band offset of said plurality of band offsets is necessarily a non-zero band offset.

18. The decoder of claim 17, wherein said decoder is configured to implement the decoding method according to any one of claims 1 to 8.

19. An encoder comprising:
- means for encoding at least one image block in a bitstream;
- means for encoding a plurality of band offsets of a sample adaptive offset filter and a band position of the first band offset in said bitstream;
- means for decoding said at least one image block;
- means for filtering said decoded block with said sample adaptive offset filter responsive to the encoded plurality of band offsets and to the encoded band position;
wherein the first encoded band offset of said plurality of band offsets is necessarily a non-zero band offset.

20. The encoder of claim 19, wherein said encoder is configured to implement the encoding method according to any one of claims 9 to 16.
